# EUROPEAN PATENT APPLICATION

(11) **EP 1 367 835 A2**
(43) Date of publication of application: **03.12.2003**
(21) Application number: 03101489.7
(22) Date of filing: 23.05.2003
(51) Int. Cl.: H04N 7/28

(54) **Method and arrangement for compressing digital color images**

(30) Priority: 31.05.2002 FI 20021049
(71) Applicant: Oplayo Oy, 00180 Helsinki (FI)
(72) Inventor: Pohjola, Teemu, 02660, ESPOO (FI)
(74) Representative: Savela, Antti-Jussi

(57) **Abstract**

This invention relates to techniques for compressing images, particularly color images. The invention forms a lightly decodable compression technique for the color information in digital color images and video. The invention is based on an idea that an active color area in a color map is defined. The active area comprises all colors of the image under compression. Further a coordinate system is formed for the active area. The colors in the active area can be quantized using a grid, wherein each node of the grid represents a color. Since the active area is smaller than the total color map area, fewer bits are needed to index the active colors in the active area. Saving the bits increases the compression of colors when compressing the image. The color values of the image are mapped using the indices of the active color area.

## Description

### Field of the Invention

This invention relates to techniques for compressing images, particularly color images. The invention also relates to compressing videos or any other image information. Especially, the invention concerns compressing color information of images.

### Background of the Invention

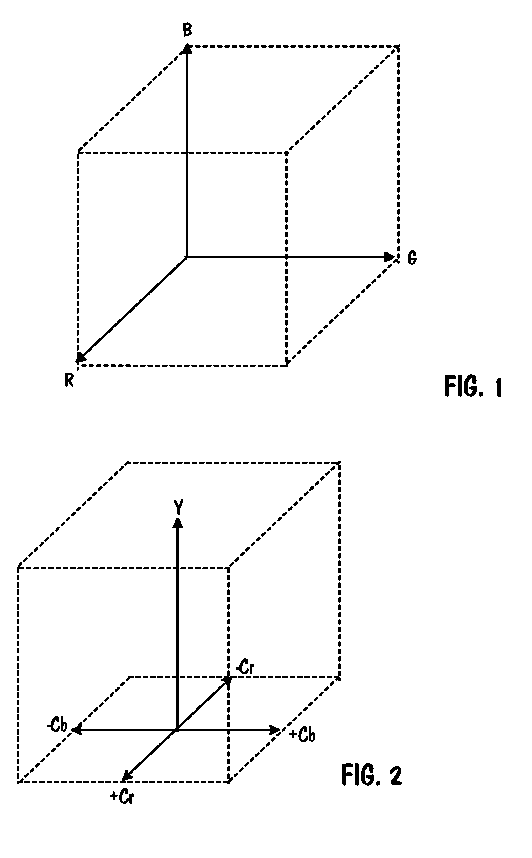

A digital color image consists of *MxN* pixels with each pixel further represented by 24 bits in some of the standard color representations such as RGB (See FIG. 1.). The storage or transmission of all this information increases to *MxNx24* bits. If the image is a frame in a digital video with 25 frames per second, the transmission requires the bandwidth *M*x*N*x24x25 bits per second (bps). Even a small frame size of 160x120 pixels yields 11,5 Mbps and is beyond the bandwidth of most fixed, and in particular, all wireless Internet connections. However, all video sequences contain a lot of redundancy and may therefore be compressed.

All image and video compression techniques utilize the existing correlations within a frame and between frames, on the one hand, and an understanding of the limitations of the human visual system, on the other hand. The correlations, such as immovable objects and areas with constant coloring, may be compressed without loss, while the omission of invisible details is by definition lossy. Further compression requires compromises to be made in the accuracy of the details and colors in the reproduced images.

The correlations within an image are typically accounted for by dividing the images into blocks and/or by some functional transform such as the Discrete Cosine Transform (DCT) or the Discrete Wavelet Transform (DWT). The image blocks can also be compressed with vector quantization (VQ), or with any other known means.

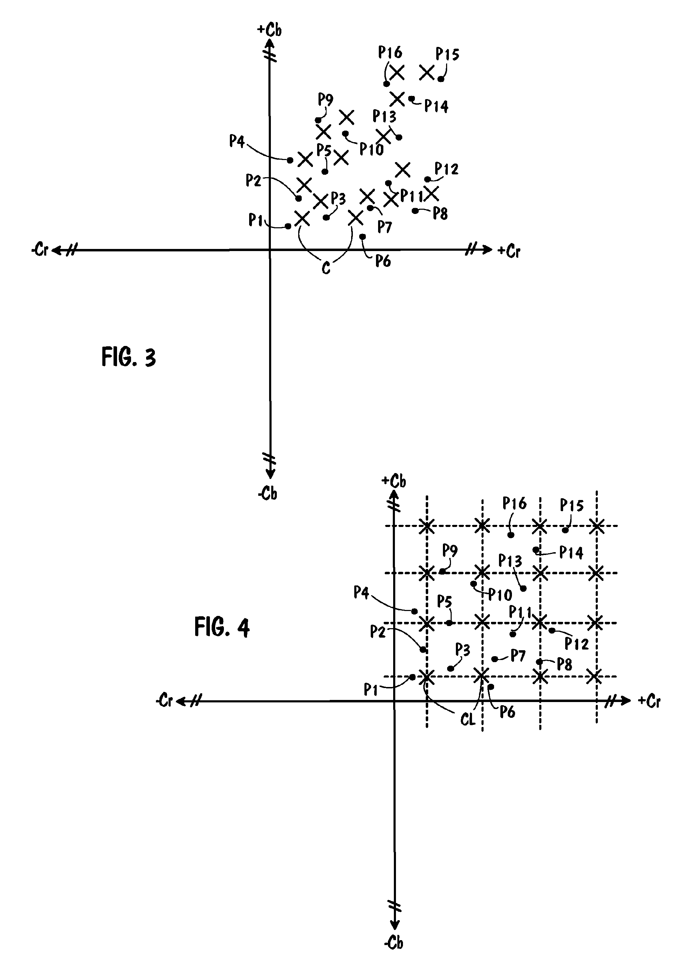

A skillful choice of the color representation in color images and videos may reduce the visually relevant information to one half. This is achieved by finding a color representation where the actual color information is separated from the brightness, i.e. luminance, of the colors. An example of this is the standard transition from the RGB color map to the YCrCb color map representation, where Y represents the luminance, and Cb and Cr jointly define the color, i.e. the chrominance. The conversion from RGB to YCrCb is made using the next equations: Cr = 0,877^{*}(R-Y) and Cb = 0,493^{*}(B-Y). FIG. 2 illustrates a YCrCb color map. The compression is achieved by deluding the eye: the human visual system is less sensitive to detail in the colors than in the luminance and the color information may be expressed on a coarser scale than the luminance. If the color resolution is reduced to one half in both directions (Cr and Cb), this reduces the data from MxNx24 bits to *MxNx8* + *(M*/*2)x(N*/*2)x8* + *(M12)x(N12)x8* = *MxNx*12 bits. Most known image compression techniques treat the components Y, Cr, and Cb separately.

Retaining good visual quality of compressed videos is just one of the many requirements facing any practical video compression technology. For commercial purposes, the encoding process should be reasonably fast in order to facilitate the encoding of large amounts of video content. Apart from a possible initial buffering of frames in the computer's memory, the viewing of a video typically occurs in real time demanding real time decoding and playback of the video. The range of intended platforms from PC's to PDA's and, even to third generation mobile phones sets further constraints on the memory usage and processing power needs of the codecs.

Fast decoding is even more important for so-called streaming videos, which are transmitted to the receiver in real time as he or she is watching them. A limited data transmission capacity determines a minimum compression ratio for streaming videos over the full length of the video. This is because the bit rate for transmitting the video must remain within the available bandwidth at all times.

Most video compression technologies comprise two components: an encoder used in compressing the videos and a decoder or player to be downloaded and installed in the computers of all the to-be-viewers of the videos. Although this downloading needs to be done only once for each player version, there is a growing interest towards player-free streaming video solutions, which can reach all internet users. In such solutions, a small player application is transmitted to the receiving end together with the video stream. In order to minimize the waiting time due to this overhead information, the application, i.e. the decoder, should be made extremely simple.

A DCT codec, as other functional transform codecs, requires a prohibitively heavy decoding side to be suitable for many PDA's and mobile phones, and in general for player-free streaming video solutions.

A VQ codec is a relatively light solution, which has a light decoding side as well. However, codebooks of VQ must be trained, and the efficiency of VQ depends on a compression ratio with a certain quality of images. Usually, the compression ratio (with a certain quality level) depends on the sizes of the codebooks: the larger the codebook is the greater the ratio is. In other words, the benefit of a larger codebook size is better image quality at any fixed compression ratio. The large codebooks require a relatively large memory space and a longer encoding time - due to prolonged vector search - and a longer transmission time. In any particular application, these disadvantages have to be weighed against the image quality and compression ratio benefits gained with the larger codebooks.

As can be seen, the present compression solutions require improvements, especially for streaming video and light platform receiving solutions. This is achieved in a way described in the claims.

### Summary of the Invention

The invention forms a lightly decodable compression technique for the color information in digital color images and video. The invention is based on the idea that an active color area in a color map is defined. The active area comprises all colors of the image under compression. Further a coordinate system is formed for the active area. The colors in the active area can be quantized, for example, using a grid wherein each node of the grid represents the colors, which are in the quantization area of the node. Since the active area is smaller than the total color map area, fewer bits are needed to index the active colors in the active area. Saving the bits increases the compression of colors when compressing the image. The color (chrominance) values of the image are mapped using the indices of the active color area.

In a preferred embodiment of the invention the vector quantization (VQ) procedure is adapted to work more readily with the active color area. The chrominance codebook(s) are trained using image blocks in the active color map format. The VQ procedure may be performed on each chrominance component separately or jointly on the two of them.

The invention satisfies the need of improving the compression of the color information at any compression ratio while retaining good perceptual color quality, and whose decoding side requires only minimal processing power.

### Brief Description of the Drawings

In the following the invention is described in more detail by means of FIGS **1 -12** in the attached drawings, where
- FIG. **1**: illustrates an example of the RGB color map,
- FIG. **2**: illustrates an example of the YCrCb color map,
- FIG. **3**: illustrates an example of coding colors according to VQ,
- FIG. **4**: illustrates an example of coding colors according to the lattice VQ.
- FIG. **5**: illustrates the quantized color values of the example of FIG. **4** after the lattice quantization,
- FIG. **6**: illustrates the lattice VQ quantized pixels of the example of FIG. **4**,
- FIG. **7**: illustrates an example of the inventive idea for restricting the color map area within the area containing all colors that exist in an image,
- FIG. **8**: illustrates an example of the lattice quantization in the active color area,
- FIG. **9**: illustrates an example of possibilities to make new active areas utilizing an original active area.
- FIG. **10**: illustrates an example of an axis used for the basis for reflecting an active color area,
- FIG. **11**: illustrates an example of a flow chart describing the main features of the inventive method, and
- FIG. **12**: illustrates an example of an inventive arrangement.

### Detailed Description of the Invention

FIG. **3** illustrates an example of coding colors according to VQ in the YCrCb color map. Dots **P1** to **P16** represent the real color values of one block (4^{*}4 pixels) of the image. The crosses **C** represent vector quantized color values, i.e. the codevector of 16 values. The codevector is a trained presentation of a number of similar blocks, i.e. the codevector quantizes several similar blocks.

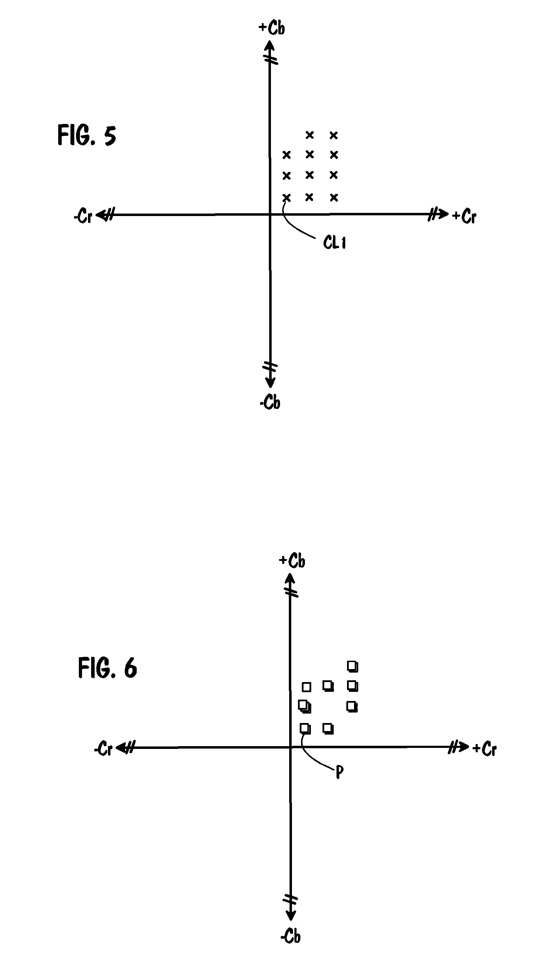

FIG. **4** illustrates an example of coding colors according to the lattice VQ. Before the real chrominance values are vector quantized, the color map is divided into a grid. Each node **CL** of the grid is illustrated as a cross. The single node represents the chrominance values, which are the nearest to the node. In this way the colors are quantized before the vector quantization. FIG. **5** shows the quantized color values **CL1** of the example of FIG. **4** after the lattice quantization. The lattice quantized values are initial values for the vector quantization. FIG. **6** represents the VQ quantized pixels of the example of FIG. **4**, i.e. the lattice VQ quantized pixels **P**. Since the block size is 4*4 pixels, the size of the codevector is 16 chrominance values, but it can comprise the same colors more than once. Thus a number of squares P correspond to a number of squares with the same chrominance values in the codevector.

As mentioned before, most known image compression techniques treat the three color components separately. (Naturally color components may be based on other components than the three color components.) This is not optimal, since all objects in an image give rise to similar correlations in each of the three color components.

Most often this fact is either deliberately overlooked or then the colors are expressed in terms of a color map where a limited number of colors (defined as RGB triples) is used and they are referred to via a set of indices. The color map scheme is most often used in the full three-dimensional color space but it may also be restricted to e.g. the chrominance plane, while the luminance is expressed separately, as showed in FIGs **2** to **6**.

If the color components are compressed independently of each other, these two redundancies are not accounted for and the compression is likely to be only sub-optimal.

On the other hand and in general, if the values of a vector quantity, such as the color of a pixel here, are limited to a small volume in space, the elements may be expressed with a smaller number of bits. If this volume is not fixed for all references to it, some overhead information is needed in determining the boundaries of the volume. The compression requirements may further necessitate the quantization of this volume. The simplest way to do this is to divide it evenly in each coordinate direction. More eleborate ways include rotations of the axis and an uneven grid used in dividing the volume. All these methods, commonly known as lattice VQ, (See FIGs. **4** to **6**) can be used.

Due to the above-mentioned matters, the problems of the correlations between the color components in real images and the active color area (the restriction of the color space to the colors that actually occur in the images) must be taken into account when realizing this invention.

If the correlations are taken into account first, the most common approach is to use color maps. Each image is first converted to a set of indices according to the colors present in the image, and the indices are then compressed. The particular way of indexing the colors is a subtle problem in that the errors introduced into the indices in the encoding stage should optimally induce only small errors in the resulting colors. In other words, the colors should be indexed in such a way that the indices of all close-by colors should be close to each other.

In DCT based techniques such as the JPEG standard, all other frequencies but the lowest, or the dc component, automatically adapt to the active color space in that they only acquire coefficient values that fit into the "active colors". The dc components are typically difference encoded so that for neighboring blocks only the difference from the previous block's respective value is transmitted. Therefore there is no real need to define the chrominance space for each frame. As to the correlation between the color components, the relationships between the DCT coefficients of the different color components are unlikely to be easily parametrized and would require excessive overhead information to be sent with the coefficients.

In VQ based techniques, the main advantages are the compact way of expressing several pixel values or DCT coefficients with just one index and the light decoding via table lookups. Hence, the need to send any side information such as the range of the colors directly decreases the efficiency of the VQ.

While VQ encoding color images/video, one can use one codebook for each color component or, in order to save memory and bandwidth requirements, use a common codebook for some components. If the VQ codebooks are fixed and trained with general image material their entries cover the full range of the luminance and chrominance values. This is inefficient in that not all combinations of the color components are even within the RGB space that can be displayed on a computer screen, let alone actually present in a given image/video frame.

In order to account for the correlations between just the two chrominance components, these may be combined to represent colors i, (Cb_{*i*} Cr_{*i*}), and a codebook may be trained to represent blocks of such colors. This simple scheme has two immediate shortcomings to it: a big portion of the code vectors may fall outside the colors present in a given image/video frame; and the colors of real image blocks (and also frames) possess some degree of angular redundancy if expressed in polar coordinates.

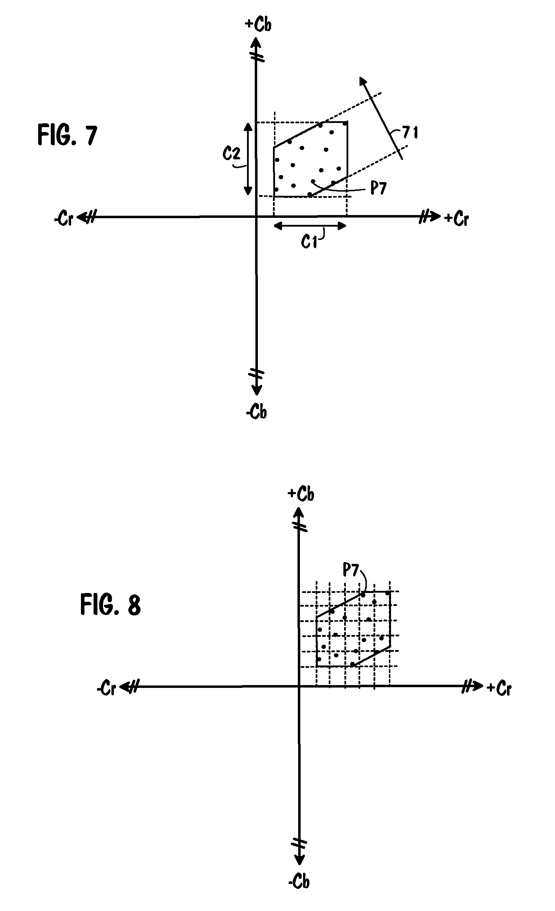

The invention may be considered as a lightly decodable compression technique for the color information in digital color images and video. It takes into account both correlations in image information and the existing color information of the image. FIG. **7** illustrates an example of the inventive idea for restricting the color map area to the area containing all colors **P7** that exist in an image. Most images contain only a part of all the possible colors. In FIG. **7** the color map is the YCrCb map, wherein the color information is expressed in one plane, wherein one axis represents the values of the Cr color component and the other axis the values of the Cb color component. For simplicity, the Y axis is not shown in FIG. **7**. It should be noted that other coordinate systems can be used as well, but the YCrCb map is considered to be preferable.

The easiest way to define the area wherein the colors of the image are, i.e. the active color area, is to define a rectangle. The smallest and largest Cb and Cr values are found in the image. These values define a rectangular region, which comprises all the colors in the frame, and also the range of each chrominance component **C1**, **C2**. Although, the rectangle is easy to form and in many case reasonable to use, it may be possible to decrease it, especially at the corners as illustrated in FIG. **7**. The decreasing of the rectangle can be obtained, for example, by using an auxiliary axis **71**. The auxiliary axis is at a certain angle to the other axes of the color map, and it forms a basis for an auxiliary color map index. The auxiliary index division should preferably be the same as the original axes have. The smallest and largest Cb and Cr values of the image at the auxiliary axis restrict the rectangle along the lines, which have the corresponding values at the auxiliary axis. It is possible to use any number of auxiliary axes, but mostly it is preferable to use only one or two axes and possibly at fixed angles, forming a hexagon or octagon. The preferable angle to one of the original axes is 45 degrees. In most real images, decreasing the rectangle reduces the region inside the polygon to be quantized by some 10-70%.

Although the restriction of the color space according to the invention used with the basic VQ technique saves bits needed to identify the colors is useable itself, it is preferable to quantize the active color area. A preferable way to quantize is to use lattice quantization, i.e. dividing the active area into a grid. FIG. **8** shows an example of the lattice quantization in the active color area. The quantized pixel value of a real pixel value **P7** of the image is the chrominance value of the nearest node of the grid. The lattice guantized chrominance values form an index vector or matrix, which is then vector quantized. The indices of the grid map the chrominance values of the image onto the active color area in the color map, and encode the colors as well.

This active color area can be divided into an even grid with either the same or some different number of quantization steps in each direction. In order to facilitate a simple search algorithm for matching colors in the color map, the range of one of the chrominance components is uniformly quantized at one axis of the color map. It is advantageous to apply the uniform quantization to that chrominance component which has the smaller range. This procedure is easily reversible for the search process: find the component with the smaller range, say Cb; divide the Cb range into n even intervals; and find the closest match to the actual Cb value in the image. The range of the other chrominance component, now this is Cr, is divided into m values separately for each Cb value at the other axis. Only the actual range available for this particular Cb value is divided in order to fully benefit from the color space constraints.

In the above the numeric range of each chrominance component has been reduced by the constrained colormap. This has the immediate consequence that fewer bits are needed for each component. Furthermore, the quantization made in forming the colormap reduces the number of accessible values for each component. The human eye is less sensitive to quantization in the chrominance values than in the luminance; the quantization can also be dependent on the desired compression ratio.

The information regarding the color map area can, for example, be expressed by four or eight eight-bit numbers, depending on the chosen number of boundary lines. These are transmitted to the receiving end as often as necessary, i.e., they can be sent separately for each frame or even parts of a frame, or they may be sent once for longer sequences of a video. In the receiving end, the decoder repeats the steps needed in constructing the color map lattice.

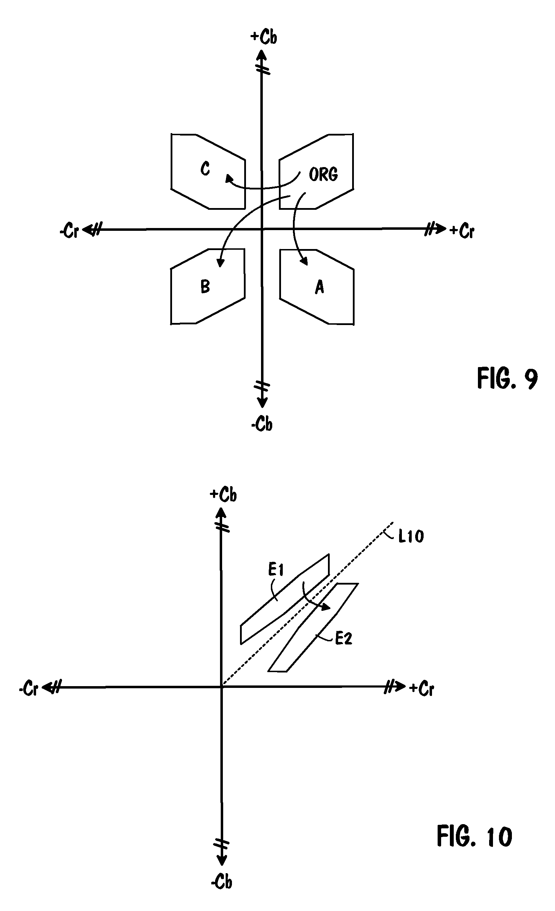

Since each image is basically independent from other images, the active color area of a single image must be determined individually for each image. However, almost all images are correlated with each other. Due to this fact, it is possible to form other active area utilizing an original active area made for a certain image. Often, this means that the boundaries of the existing active area may be adjusted for the new image. FIG. **9** illustrates an example of possibilities to make new areas. If the original area **ORG** is on one of the quadrants of the color map, it is possible to reflect it in relation to one axis of the chrominance plane or the origin in such a way that new active areas **A**, **B**, and **C** can be formed, each of them on a certain quadrant of the color map. As can be seen, the reflections are preferably possible to make if the place of the origin remains. Naturally, the active area can be reflected if it is, for example on the area of two or more quadrants, but then an overlapping area usually exists. Normally, active color areas cover the area nearby the origin, but for simplicity FIG. **9** illustrates a rare situation. Actually, the axis used for the basis of reflection can be any line on the color map, as described in FIG. **10**, wherein area **E1** is reflected in relation to line **L10** forming a new area **E2**.

The same effect can be achieved by reflecting the color map of a given frame in relation to the chrominance axis such that the origin, (Cb,Cr)=(0,0), appears in lower left quadrant of the color map.

In general, the color map could be rotated around the origin of the chrominance plane but the reflection scheme of the origin is on the lower left quadrant provides a simple way of doing this with no unnecessary computations.

Such a simple reflection scheme maps the Cb-Cr distributions of frames quite well onto one single distribution, facilitating the usage of common codebooks for all frames. This means that when a reflection of an active color area is made the color distribution of the area reflects as well.

In a preferable embodiment of the invention the VQ procedure is used for encoding images. Due to this, it is preferable to adapt the codevectors (chrominance codebooks) used to an active color area of each image. The chrominance codebooks are trained using training image blocks in the active color map format, or alternatively, a combined codebook (containing, for example, Cr and Cb values) is trained in the active color map format.

The color map is best used if, e.g., VQ code vectors used to encode the colors can be scaled into the active chrominance area. However, as the active color map varies from frame to frame the scales and statistics of the components change. The scales can to some extent be accounted for in the training stage but the fact that the colors may be centered into different regions of the color map is more of a problem. If there exists correlation between images, the above mentioned reflection scheme can be used.

The training material for forming the codebooks is to be first run through the above color map conversion procedure. The resulting blocks or vectors can be used in different ways: to train separate codebooks for Cb and Cr; to train one common codebook for the two components; or to train one joint codebook, whose entries contain both chrominance components. The color map does not need to be changed for each frame and it can be defined and kept constant for whole video shots or scenes showing similarly colored images.

The perceived usage of the color map is robust against quantization of the color map boundaries. Therefore, the colormap can be held constant as long as the boundaries stay close to the same quantization level and then changed. In this way, not all the boundary parameters need to be transmitted with each frame while at the same time retaining the flexibility of varying the color map frame by frame.

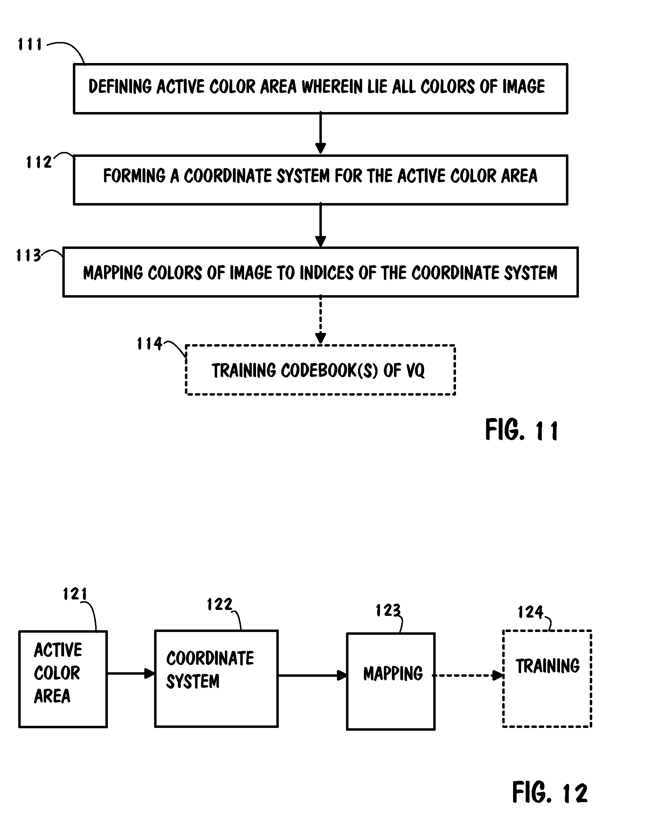

FIG. **11** shows an example of a flow chart describing the main features of the inventive method. First, an active color area wherein lie all colors of the image is defined **111**. A coordinate system for the active color area is formed **112**, and the colors of the images are mapped **113** to indices of the coordinate system. Furthermore, the defining step can comprise sub phases: to determine a smallest and a largest color map index at an axis of the color map, these indices belonging to certain colors of the images; to determine a smallest and a largest color map index at another axis of the color map, these indices belonging to certain colors of the images; and to form a rectangle area in the color map, using said indices at both axes for bordering the rectangle.

Further, at least one auxiliary axis can be used for determining a smallest and a largest auxiliary color map index, in an auxiliary axis of the color map, the auxiliary axis being at a certain angle to the other axis of the color map. These indices of the auxiliary axis belong to certain colors of the images. The determined indices of the auxiliary axis or axes can be used for decreasing the active rectangle, using lines which are perpendicular with the auxiliary axis, one having said smallest index value at the auxiliary axis, and the other having said largest index value at the auxiliary axis. These lines border the active color area with the lines of the rectangle. As mentioned, the restriction of the active color area can be repeated (using the auxiliary axes or lines) as many times as required for decreasing the active color area.

The step of forming the coordinate system can comprise a sub phase for forming a grid for the active color area for quantizating the colors in the active color area. The grid may be uniform across the active color area. Furthermore, the phase of forming the grid may comprise the steps of dividing the active color area uniformly at the color map axis, which has the smaller range of active color indices, and dividing the active color area at the other color map axis separately for each resulting index of division. In this way a best amount of quantization values are going to be achieved.

The inventive method can also comprise a preliminary step of training **114** codebooks in a format that represents the active color area. The preliminary step means that before compressing the real image in question, the codevectors used should be trained for the active color area using training image or images. It should be noted that these training images must be processed in a similar way as the actual image.

Furthermore, in the inventive arrangement the active color area can be reflected in relation to a certain line on the color map for forming a new active color area.

The method of color compression proposed in the invention is suitable to be used in conjunction with any compression technology used for the luminance information.

FIG. **12** shows an example of an inventive arrangement. The arrangement according to the invention for compressing a color image comprises: means **121** for defining an active color area wherein lie all colors of the image, means **122** for forming a coordinate system for the active color area, and means **123** for mapping the colors of the images to indices of the coordinate system.

The means for defining the active color area can further comprise: means for determining a smallest and a largest color map index, at axes of the color map, these indices belonging to certain colors of the images; and means for forming a rectangle area in the color map, using said indices at both axes for bordering the rectangle. Furthermore, the means for defining the active color area may comprise: means for determining at least one auxiliary axis that is at a certain angle to the other axis, that is functionally connected to the means for determining a smallest and a largest color map index; and means for decreasing the active color area using the indices of any of said axes to border the active color area.

The means for forming a coordinate system preferably further comprises means for forming a grid for defining the active color area for quantizating the colors in the active color area.

The inventive arrangement may preferably further comprise means **124** for training codebooks using a training material that is processed in the means for defining an active color area, in the means for forming a coordinate system, and in the mapping means. Preferably the training means handles vector quantization codebooks. Yet further, in the inventive arrangement the means for defining an active color area may optionally comprise means for reflecting a defined active color area in relation to a certain line on the color map for forming a new active color area. And further, optionally the reflection means may be capable to scale, rotate, and/or skew the defined active color area.

In practical usage, any inventive arrangement is possible to embed as a part of a complete video compression/decompression software. The software consists of a user interface; media readers for reading in the video and audio information; the algorithms for defining the active color region and for dividing it into a grid as proposed in this invention; some form of basic encoding; some solution for sending the stream; and a small decoding software package to be transmitted in the beginning of the video stream (or alternatively use codebooks and a player already stored in the receiving terminal) and capable of recreating the colors map for each frame, if necessary, from the information transmitted in the stream and using the color map to display the colors.

As can be seen, the invention can be modified to be suitable for a plurality of different solutions. Thus it is evident that the invention is not restricted to the above-mentioned examples, but it can be used in other solutions as well, in the scope of the inventive idea.

## Claims

1. A method for compressing a color image wherein a color map is used for determining colors of the image, **characterized in that** the method comprises the steps of:
- defining an active color area wherein lie all colors of the image,
- forming a coordinate system for the active color area, and
- mapping the colors of the images to indices of the coordinate system.

2. A method according to claim 1, **characterized in that** the defining step comprises the steps of:
- determining a smallest and a largest color map index, at an axis of the color map, these indices belonging to certain colors of the images,
- determining a smallest and a largest color map index at an other axis of the color map, these indices belonging to certain colors of the images, and
- forming a rectangle area in the color map, using said indices at both axes for setting borders of the rectangle.

3. A method according to claim 2, **characterized in that** the method further comprises the steps of:
- determining a smallest and a largest auxiliary color map index in an auxiliary axis of the color map, the auxiliary axis being at a certain angle to the other axis of the color map, and being the third axis, these indices of the auxiliary axis belonging to certain colors of the images,
- decreasing the active rectangle, using lines which are perpendicular with the auxiliary axis, one having said smallest index value at the auxiliary axis, and the other having said largest index value at the auxiliary axis, to border the active color area with the lines of the rectangle.

4. A method according to claim 3, **characterized in that** the method further comprises the steps of:
- a) determining a smallest and a largest auxiliary color map index, at a new auxiliary axis of the color map, the new auxiliary axis being at a certain angle to the other axis of the color map, these indices of the new auxiliary axis belonging to certain colors of the images, and
- b) decreasing the active color area using lines, which are perpendicular with the new auxiliary axis, one having said smallest index value at the new auxiliary axis, and the other having said largest index value at the new auxiliary axis.

5. A method according to claim 3 or 4, **characterized in that** said angle or angles is 45 degrees.

6. A method according to claim 4, **characterized in that** steps a) and b) are repeated as many times as required for decreasing the active color area.

7. A method according to any of claims 1 - 4, **characterized in that** the step of forming a coordinate system comprises the step of forming a grid for the active color area for quantizating the colors in the active color area.

8. A method according to claim 7, **characterized in that** the grid is uniform across the active color area.

9. A method according to claim 7, **characterized in that** the step of forming the grid furthermore comprises the steps of:
- 9a) dividing the active color area uniformly at the color map axis, which has the smaller range of active color indices, and
- 9b) dividing the active color area at the other color map axis separately for each result index of division 9a).

10. A method according to any of claims 1 - 9, **characterized in that** the method further comprises the preliminary step of training codebooks in a format that represents the active color area.

11. A method according to claim 10, **characterized in that** the codebooks are vector quantization codebooks.

12. A method according to any of claims 4 - 11, **characterized in that** the active color area is reflected in relation to one of the axis of the color map for forming a new active color area.

13. A method according to any of claims 4 - 11, **characterized in that** the active color area is reflected in relation to a certain line on the color map for forming a new active color area.

14. An arrangement for compressing a color image wherein a color map is used for determining colors of the image, **characterized in that** the arrangement comprises:
- means for defining an active color area wherein lie all colors of the image,
- means for forming a coordinate system for the active color area, and
- means for mapping the colors of the images to indices of the coordinate system.

15. An arrangement according to claim 14, **characterized in that** the means for defining the active color area further comprises:
- means for determining a smallest and a largest color map index, at axes of the color map, these indices belonging to certain colors of the images, and
- means for forming a rectangle area in the color map, using said indices at both axes for setting borders of the rectangle.

16. An arrangement according to claim 15, **characterized in that** the means for defining the active color area further comprises:
- means for determining at least one auxiliary axis that is at a certain angle to the other axis, that is functionally connected to the means for determining a smallest and a largest color map index, and
- means for decreasing the active color area using the indices of any of said axes to border the active color area.

17. An arrangement according to claim 14, 15, or 16, **characterized in that** the means for forming a coordinate system further comprises means for forming a grid for defining the active color area for quantizating the colors in the active color area.

18. An arrangement according to any of claims 14 - 17, **characterized in that** the arrangement further comprises means for training codebooks using a training material that is processed in the means for defining an active color area, in the means for forming a coordinate system, and in the mapping means.

19. An arrangement according to claim 18, **characterized in that** the training means handles vector quantization codebooks.

20. An arrangement according to any of claims 14 - 19, **characterized in that** the means for defining an active color area comprises means for reflecting a defined active color area in relation to a certain line on the color map for forming a new active color area.
